(19) Europäisches Patentamt

European Patent Office

Office européen des brevets

(11) **EP 4 210 126 B1**

(12) **EUROPEAN PATENT SPECIFICATION**

(45) Date of publication and mention
of the grant of the patent:
**07.08.2024 Bulletin 2024/32**

(21) Application number: **23150418.4**

(22) Date of filing: **05.01.2023**

(51) International Patent Classification (IPC):
*H01M 4/04* (2006.01)    *H01M 4/134* (2010.01)
*H01M 4/1395* (2010.01)    *H01M 4/38* (2006.01)
*H01M 4/02* (2006.01)

(52) Cooperative Patent Classification (CPC):
**H01M 4/386; H01M 4/0471; H01M 4/134;
H01M 4/1395;** H01M 2004/027; Y02E 60/10

(54) **NEGATIVE ELECTRODE INCLUDING SILICON-BASED NEGATIVE ELECTRODE ACTIVE MATERIAL AND SECONDARY BATTERY INCLUDING THE SAME**

NEGATIVELEKTRODE MIT SILICIUMBASIERTEM NEGATIVELEKTRODENAKTIVMATERIAL UND SEKUNDÄRBATTERIE DAMIT

ÉLECTRODE NÉGATIVE COMPRENANT UN MATÉRIAU ACTIF D'ÉLECTRODE NÉGATIVE À BASE DE SILICIUM ET BATTERIE SECONDAIRE LA COMPRENANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **06.01.2022 KR 20220002041
06.12.2022 KR 20220168471**

(43) Date of publication of application:
**12.07.2023 Bulletin 2023/28**

(73) Proprietor: **SK On Co., Ltd.
Seoul 03161 (KR)**

(72) Inventors:
• **PARK, Eun Jun
34124 Daejeon (KR)**
• **MOON, Joon Hyung
34124 Daejeon (KR)**
• **YUN, Jung Hyun
34124 Daejeon (KR)**

(74) Representative: **Prüfer & Partner mbB
Patentanwälte · Rechtsanwälte
Sohnckestraße 12
81479 München (DE)**

(56) References cited:
**EP-A1- 3 965 192        CN-A- 111 162 268
US-A1- 2021 363 020**

• **NANDA J ET AL: "In situ Raman microscopy
during discharge of a high capacity
silicon-carbon composite Li-ion battery negative
electrode", ELECTROCHEMISTRY
COMMUNICATIONS, ELSEVIER AMSTERDAM,
NL, vol. 11, no. 1, 1 January 2009 (2009-01-01),
pages 235 - 237, XP025839045, ISSN: 1388-2481,
[retrieved on 20081120], DOI:
10.1016/J.ELECOM.2008.11.006**

**Description**

**CROSS-REFERENCE TO RELATED APPLICATIONS**

This application claims priority under 35 U.S.C. §119 to Korean Patent Application No. 10-2022-0002041, filed on January 6th, 2022, in the Korean Intellectual Property Office, the disclosure of which is incorporated herein by reference in its entirety.

**TECHNICAL FIELD**

The following disclosure relates to a negative electrode including a silicon-based negative electrode active material and a secondary battery including the same.

**BACKGROUND**

Recently, as an issue of global warming arises, a demand for environmentally friendly technologies has been rapidly increasing in response thereto. In particular, as a technical demand for electric vehicles and energy storage systems (ESS) increases, a demand for a lithium secondary battery in the spotlight as an energy storage device is exploding. Therefore, studies to improve energy density of the lithium secondary battery are in progress.

A conventional commercial lithium secondary battery usually uses a graphite active material such as natural graphite and artificial graphite. However, there is a limitation of the low energy density of a battery due to the low theoretical capacity of graphite (372 mAh/g). Due to the limitation, studies to develop a new negative electrode material are in progress in order to improve energy density.

A silicon-based negative electrode is emerging as one solution due to its high theoretical capacity (3580 mAh/g). However, a silicon-based negative electrode forms a crystalline Si phase and an amorphous Si phase during a production process, and these phases are known to have different degrees of expansion and contraction during battery charge and discharge. In addition, when the size distribution of crystalline Si is not uniform during electrode production, deterioration starts from some particles including bulky crystalline Si during charge and discharge cycles, and this may cause non-uniform deterioration in the entire electrode and local electrode deterioration. As a result, the life characteristics of a battery may be deteriorated.

In US 2021/363020 A1, a negative electrode active material is described which includes negative electrode active material particles which includes a silicon oxide (SiOx, 0<x≤2) and at least one lithium silicate selected from $Li_2SiO_3$, $Li_2Si_2O_5$, and $Li_4SiO_4$ in at least a part of the silicon oxide. The negative electrode active material particles have a maximum peak position by a Raman spectrum of more than 460 cm$^{-1}$ and less than 500 cm$^{-1}$. Further, in US 2021/363020 A1, a method of preparing this negative electrode active material, a negative electrode, and a lithium secondary battery including the negative electrode active material are described.

**SUMMARY**

An embodiment of the present invention is directed to providing an electrode active material layer in which silicon-based active material particles have uniform crystallinity during production of an electrode to which a silicon-based active material is applied, and an electrode including the electrode active material layer, thereby improving life characteristics of a battery.

In one general aspect, a negative electrode for a secondary battery includes: a current collector; and a negative electrode active material layer including a plurality of silicon-based active material particles, which is positioned on the current collector,

wherein the following Relation 1 is satisfied:

$$[\text{Relation 1}] \quad 0.01 \leq A-B \leq 0.81$$

wherein A is an average value of Raman spectrum peak intensity ratios Ia/Ib for 50 silicon-based active material particles randomly selected in the negative electrode active material layer, B is an average value of values excluding top 10 values and bottom 10 values, for each Raman spectrum peak intensity ratio Ia/Ib value for the 50 silicon-based active material particles, Ia is a peak intensity at 515±15 cm$^{-1}$, and Ib is a peak intensity at 470±30 cm$^{-1}$.

According to an exemplary embodiment, the silicon-based active material may be at least one selected from the group consisting of silicon, a silicon oxide ($SiO_x$, $0<x\leq2$), a silicon alloy, and a silicon/carbon composite.

According to an exemplary embodiment, the silicon-based active material may include a silicon oxide pretreated with a metal.

According to an exemplary embodiment, the silicon oxide pretreated with a metal may include a silicon oxide ($SiO_x$, $0<x\leq2$); and a metal silicate positioned on at least a part of the silicon oxide ($M_aSi_bO_c$, M is Li or Mg, $1\leq a\leq6$, $1\leq b<3$, and $0<c\leq7$).

According to an exemplary embodiment, the silicon oxide pretreated with a metal may include 40 to 95 wt% of a metal silicate with respect to the total weight.

The negative electrode for a secondary battery according to an exemplary embodiment may further satisfy the following Relation 2:

$$[\text{Relation 2}] \quad 0.01 \leq A-C \leq 0.65$$

wherein A is an average value of Raman spectrum peak intensity ratios Ia/Ib for 50 silicon-based active material particles randomly selected in the negative electrode active material layer, C is an average value of values excluding top 5 values and bottom 5 values, for each Raman spectrum peak intensity ratio Ia/Ib value for the 50 silicon-based active material particles, Ia is a peak intensity at $515\pm15$ cm$^{-1}$, and Ib is a peak intensity at 470130 cm$^{-1}$.

The negative electrode for a secondary battery according to an exemplary embodiment may satisfy at least one selected from the following Relation 3a, Relation 3b, and Relation 3c:

$$[\text{Relation 3a}] \quad 0.3 \leq A \leq 8.50$$

$$[\text{Relation 3b}] \quad 0.3 \leq B \leq 7.71$$

$$[\text{Relation 3c}] \quad 0.3 \leq C \leq 7.91$$

wherein A is an average value of Raman spectrum peak intensity ratios Ia/Ib for 50 silicon-based active material particles randomly selected in the negative electrode active material layer, B is an average value of values excluding top 10 values and bottom 10 values, for each Raman spectrum peak intensity ratio Ia/Ib value for the 50 silicon-based active material particles, C is an average value of values excluding top 5 values and bottom 5 values, for each Raman spectrum peak intensity ratio Ia/Ib value for the 50 silicon-based active material particles.

According to an exemplary embodiment, the negative electrode active material layer may include 10 wt% or more of the silicon-based active material particles with respect to the total weight of the negative electrode active material.

In another general aspect, a method for producing a negative electrode for a secondary battery includes: a) mixing silicon compound particles and a metal precursor at 200 to 800 rpm, b) preliminarily heat treating a product from a) at 100°C or higher and lower than 500°C, and c) heat treating a product from b) at 500 to 800°C, thereby preparing a negative electrode active material.

According to an exemplary embodiment, before a), p1) mixing Si powder and $SiO_2$ powder and heat treating the mixture at lower than 900°C may be further included, thereby preparing the silicon compound particles.

According to an exemplary embodiment, before a), p1) mixing Si powder and $SiO_2$ powder and heat treating the mixture at lower than 900°C and p2) heat treating a product from p1) at lower than 800°C in the presence of a hydrocarbon gas may be further included, thereby preparing the silicon compound particles.

In still another general aspect, a secondary battery includes the negative electrode of the exemplary embodiment described above.

Other features and aspects will be apparent from the following detailed description, the drawings, and the claims.

## DETAILED DESCRIPTION OF EMBODIMENTS

Advantages and features of the present disclosure and methods to achieve them will become apparent from the following exemplary embodiments described in detail with reference to the accompanying drawings. However, the present disclosure is not limited to the exemplary embodiments disclosed below, but will be implemented in various forms. The exemplary embodiments of the present disclosure make the present disclosure thorough and are provided so that those skilled in the art can easily understand the scope of the present disclosure. Therefore, the present disclosure will be defined by the scope of the appended claims. Detailed description for carrying out the present disclosure will be provided with reference to the accompanying drawings below. Regardless of the drawings, the same reference number indicates the same constitutional element, and "and/or" includes each of and all combinations of one or more of the mentioned items.

Unless otherwise defined herein, all terms used herein (including technical and scientific terms) may have the meaning that is commonly understood by those skilled in the art. Throughout the present specification, unless explicitly described to the contrary, "comprising" any elements will be understood to imply further inclusion of other elements rather than the exclusion of any other elements. In addition, unless explicitly described to the contrary, a singular form includes a plural form herein.

In the present specification, it will be understood that when an element such as a layer, film, region, or substrate is referred to as being "on" or "above" another element, it can be directly on the other element or intervening elements may also be present.

An exemplary embodiment provides a negative electrode for a secondary battery. The negative electrode includes: a current collector; and a negative electrode active material layer including a plurality of silicon-based active material particles, which is positioned on the current collector.

The present exemplary embodiment has a technical feature in performing a metal pretreatment process of a silicon-based compound under specific conditions and performing a preliminary heat treatment process before a metal pretreatment process at a high temperature, thereby improving the non-uniformity of distribution of crystalline Si(c-Si), for example, the non-uniformity of size distribution of c-Si, in a plurality of silicon-based compound particles.

According to the present exemplary embodiment, a Raman spectrum peak intensity ratio for 50 silicon-based active material particles randomly selected in a negative electrode active material layer is controlled as follows, thereby securing the uniform crystallinity and size distribution of the entire silicon-based active material particles in the negative electrode active material layer.

According to an exemplary embodiment, the following Relation 1 is satisfied:

$$[\text{Relation 1}] \quad 0.01 \leq A-B \leq 0.81$$

wherein A is an average value of Raman spectrum peak intensity ratios Ia/Ib for 50 silicon-based active material particles randomly selected in the negative electrode active material layer, B is an average value of values excluding top 10 values and bottom 10 values, for each Raman spectrum peak intensity ratio Ia/Ib value for the 50 silicon-based active material particles, Ia is a peak intensity at $515\pm15\,\text{cm}^{-1}$, and Ib is a peak intensity at $470130\,\text{cm}^{-1}$. Otherwise, specifically, Ib may be a peak intensity at $480\pm20\,\text{cm}^{-1}$.

The measurement of the Raman spectrum peak intensity ratio may be performed on a plurality of silicon-based active material particles in a negative electrode active material layer of a negative electrode which is prepared in advance or freshly produced. Since the Raman spectrum peak intensity ratio is expected to have very low variability by a charge and discharge cycle, the measurement may be performed on a negative electrode subjected to several charge and discharge cycles. For example, the negative electrode may be subjected to less than 10 charge and discharge cycles. In general, considering that about 2 or 3 charge and discharge cycles are performed in the production of a negative electrode, the measurement may be performed on a negative electrode obtained by disassembling a secondary battery on sale in the market.

The Raman spectrum peak intensity ratio Ia/Ib refers to a formation ratio of a crystalline Si phase and an amorphous Si phase, and the Ia peak intensity may be an indicator of c-Si (crystalline Si phase) formation and the Ib peak intensity may be an indicator of a-Si (amorphous Si phase) formation.

As the value of A-B which is a difference between the average value A of the peak intensity ratio and the average value B of the peak intensity ratio is smaller, the crystallinity of a plurality of silicon-based active material particles distributed in the negative electrode active material layer is more uniform. By satisfying Relation 1 described above, in the present exemplary embodiment, electrode expansion and contraction may be maintained uniform throughout in the thickness direction and the width direction of the electrode, and the life characteristics of the electrode may be improved. Meanwhile, the numerical value range of A-B of the present exemplary embodiment means that the composition of one silicon-based active material particle approaches the overall average value of a plurality of particles.

Specifically, in the case of $0.01 \leq A-B \leq 0.73$, more specifically $0.01 \leq A-B \leq 0.5$, or still more specifically $0.01 \leq A-B \leq 0.17$, a plurality of silicon-based active material particles distributed in the negative electrode active material layer may have more uniform crystallinity.

In addition, the silicon-based active material particles being crystalline means that the shape of single Si positioned inside the particle is crystalline, and the particles being amorphous means that the shape of single Si positioned inside the particle is amorphous or the particles are so fine that it is difficult to measure the particle size by the Scherrer's equation among XRD analysis methods.

The negative electrode of the present exemplary embodiment may further satisfy the following Relation 2:

$$[\text{Relation 2}] \quad 0.01 \leq A\text{-}C \leq 0.65$$

wherein A is an average value of Raman spectrum peak intensity ratios Ia/Ib for 50 silicon-based active material particles randomly selected in the negative electrode active material layer, C is an average value of values excluding top 5 values and bottom 5 values, for each Raman spectrum peak intensity ratio Ia/Ib value for the 50 silicon-based active material particles, Ia is a peak intensity at $515 \pm 15$ cm$^{-1}$, and Ib is a peak intensity at $470130$ cm$^{-1}$. Otherwise, specifically, Ib may be a peak intensity at $480 \pm 20$ cm$^{-1}$.

Specifically, in the case of $0.01 \leq A\text{-}C \leq 0.59$, more specifically $0.01 \leq A\text{-}C \leq 0.54$, or still more specifically $0.01 \leq A\text{-}C \leq 0.48$, a plurality of silicon-based particles distributed in the negative electrode active material layer may have more uniform crystallinity.

The negative electrode of the present exemplary embodiment may satisfy at least one selected from the following Relation 3a, Relation 3b, and Relation 3c:

$$[\text{Relation 3a}] \quad 0.3 \leq A \leq 8.50$$

$$[\text{Relation 3b}] \quad 0.3 \leq B \leq 7.71$$

$$[\text{Relation 3c}] \quad 0.3 \leq C \leq 7.91$$

wherein A is an average value of Raman spectrum peak intensity ratios Ia/Ib for 50 silicon-based active material particles randomly selected in the negative electrode active material layer, B is an average value of values excluding top 10 values and bottom 10 values, for each Raman spectrum peak intensity ratio Ia/Ib value for the 50 silicon-based active material particles, C is an average value of values excluding top 5 values and bottom 5 values, for each Raman spectrum peak intensity ratio Ia/Ib value for the 50 silicon-based active material particles.

A should only satisfy one of the relations described above, and though it is not limited thereto, as a nonlimiting example, it may be 0.3 to 8.5, 0.3 to 7.5, 0.3 to 2.9, 0.3 to 2.5, 0.3 to 1.5, or 0.3 to 0.8.

B should only satisfy one of the relations described above, and though it is not limited thereto, as a nonlimiting example, it may be 0.3 to 7.7, 0.3 to 6.7, 0.3 to 2.8, 0.3 to 2.5, or 0.3 to 0.7.

C should only satisfy one of the relations described above, and though it is not limited thereto, as a nonlimiting example, it may be 0.3 to 8.0, 0.3 to 7.0, 0.3 to 3.0, 0.3 to 2.5, 0.3 to 2.1, or 0.3 to 0.7.

Hereinafter, a current collector and a negative electrode active material layer which are each configuration of the negative electrode will be described in detail.

The current collector may be selected from the group consisting of a copper foil, a nickel foil, a stainless steel foil, a titanium foil, a nickel foam, a copper foam, a polymer substrate coated with a conductive metal, and a combination thereof, but is not limited thereto.

The negative electrode active material layer includes a silicon-based active material, and may further include a binder and a conductive material. The negative electrode active material layer may further include a material capable of selectively reversibly inserting/desorbing a lithium ion, a lithium metal, an alloy of lithium metal, a material capable of being doped and dedoped on lithium, or a transition metal oxide, in addition to the silicon-based active material. An example of the material capable of reversibly inserting/desorbing a lithium ion may include a carbon material, that is, a carbon-based negative electrode active material which is commonly used in the lithium secondary battery. A representative example of the carbon-based negative electrode active material may include crystalline carbon, amorphous carbon, or a combination thereof. An example of the crystalline carbon may include graphite such as amorphous, plate-shaped, flake-shaped, spherical, or fibrous natural graphite or artificial graphite, and an example of the amorphous carbon includes soft carbon or hard carbon, a mesophase pitch carbide, calcined coke, and the like. The alloy of lithium metal may be an alloy of lithium with a metal selected from the group consisting of Na, K, Rb, Cs, Fr, Be, Mg, Ca, Sr, Si, Sb, Pb, In, Zn, Ba, Ra, Ge, Al, and Sn.

The silicon-based active material may be at least one selected from the group consisting of silicon (Si), silicon oxides ($SiO_x$, $0<x\leq2$), a silicon alloy (Si-Q, Q is an element selected from the group consisting of alkali metals, alkaline earth metals, Group 13 elements, Group 14 elements, Group 15 elements, Group 16 elements, transition metals, rare earth elements, and combinations thereof), and a silicon/carbon composite.

Specifically, the silicon-based active material may include a silicon oxide pretreated with a metal. Generally, a silicon oxide shows excellent life characteristics due to its low volume expansion rate as compared with silicon, but forms an irreversible phase during initial charge and discharge to show unique low initial efficiency. The initial efficiency reduction problem may be improved by forming a metal silicate in advance by a metal pretreatment. Specifically, the silicon oxide pretreated with a metal may be a silicon oxide pretreated with lithium or magnesium, and may include active material particles including a silicon oxide ($SiO_x$, $0<x\leq2$); and a metal silicate ($M_aSi_bO_c$, M is Li or Mg, $1\leq a\leq6$, $1\leq b<3$, and $0<c\leq7$) positioned on at least a part of the silicon oxide. When the metal is Li, the metal silicate may be $Li_2SiO_3$, $Li_2Si_2O_5$, $Li_4SiO_4$, or a combination thereof, and when the metal is Mg, the metal silicate may be MgSiOs, $MgSi_2O_5$, $Mg_2SiO_4$, or a combination thereof, but it is not limited thereto. Meanwhile, it is more preferred that the silicon oxide pretreated with a metal does not substantially include $Li_4SiO_4$ or $Mg_2SiO_4$. Since a $Li_4SiO_4$ or $Mg_2SiO_4$ phase has an irreversible characteristics to a M ion (Li or Mg ion) and is vulnerable to moisture, it is not preferred for use as an active material of a negative electrode using a water-based binder, and it is preferred that the content of the $Li_4SiO_4$ or $Mg_2SiO_4$ phase is less than 35 wt%, preferably less than 5 wt%, and more preferably substantially 0 wt% with respect to the total weight of the silicon oxide, for producing a stable slurry. Thus, the water resistance of the negative electrode active material may be improved.

The silicon oxide pretreated with a metal may include 40 to 95 wt%, preferably 45 to 90 wt%, 50 to 90 wt%, more preferably 40 to 85 wt%, or 50 to 85 wt% of the metal silicate with respect to the total weight, but is not particularly limited. Conventionally, during a pretreatment of the silicon-based active material, the content of the metal silicate is locally increased due to a non-uniform gradient of a silicon-based active material temperature and a non-uniform mixed state of the silicon-based active material and a Li source, and also, a partial disproportionation reaction starts. Thus, the production of c-Si seeds is locally increased or c-Si seed are agglomerated, so that a c-Si size distribution becomes non-uniform more rapidly. That is, c-Si growth may not be uniformly controlled in the pretreatment for securing a metal silicate in a high content by a conventional synthesis method, thereby causing deterioration of an electrode. However, in the present exemplary embodiment, a metal pretreatment process is performed under specific conditions described later, thereby forming the metal silicate in a high content while maintaining a fine c-Si seed form. The results are analyzed as being due to the fact that fine c-Si is uniformly distributed in a plurality of $SiO_x$ particles to suppress c-Si growth.

The silicon-based active material particles may have an average particle size of more than 2 um and less than 30 um, preferably more than 6 um and less than 10 um, and in this case, uniform mixing with a several micro-sized metal precursor surrounding $SiO_x$ particles during the metal pretreatment is allowed, and then a uniform reaction (prelithiation) proceeds in all directions of $SiO_x$ particles during a heat treatment, so that crystalline $SiO_x$ particles uniformly pretreated with Li may be recovered.

The average particle size of the silicon-based active material particles may refer to D50, and D50 refers to a diameter of a particle with a cumulative volume of 50% when cumulated from the smallest particle in measurement of a particle size distribution by a laser scattering method. Here, for D50, the particle size distribution may be measured by collecting a sample for the produced carbonaceous material according to a KS A ISO 13320-1 standard, using Mastersizer 3000 from Malvern Panalytical Ltd. Specifically, a volume density may be measured after dispersion is performed using ethanol as a solvent, and, if necessary, using an ultrasonic disperser.

The silicon-based active material may be included at 10 wt% or more, preferably 20 wt% or more, 30 wt% or more, more preferably 40 wt% or more, or 50 wt% or more with respect to the total weight of the negative electrode active material included in the negative electrode active material layer, but is not particularly limited thereto. According to an example, the silicon-based active material may be included at 100 wt% with respect to the total weight of the negative electrode active material. Conventionally, when only the silicon-based active material is used in a negative electrode active material in its entirety, excellent life characteristics were not implemented due to electrode volume expansion, and thus, more than a half of a graphite-based active material or the like which may alleviate contraction/expansion of active material particles is mixed, but in the present exemplary embodiment, local deterioration of an electrode due to non-uniform volume expansion is improved, and thus, a negative electrode having improved high capacity properties and long-term cycle properties may be produced.

The binder serves to adhere negative electrode active material particles to each other well and to attach the negative electrode active material to a current collector well, and may be preferably a water-based binder. The water-based binder may be polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene-butadiene rubber (SBR), fluorine rubber, various copolymers thereof, and the like, and specifically, the binder may include a binder formed of carboxymethyl cellulose (CMC), styrene-butadiene rubber (SBR), and a mixture thereof.

The conductive material is used for imparting conductivity to an electrode, and any conductive material may be used as long as it is an electroconductive material which does not cause a chemical change in the battery to be configured. An example of the conductive material, a conductive material including a carbon-based material such as natural graphite, artificial graphite, carbon black, acetylene black, ketjen black, and carbon fiber; a metal-based material such as metal powder or metal fiber of copper, nickel, aluminum, silver, and the like; a conductive polymer such as a polyphenylene derivative; or a mixture thereof may be used.

Each of the contents of the binder and the conductive material in the negative electrode active material layer may be 1 to 10 wt%, preferably 1 to 5 wt% with respect to the total weight of the negative electrode active material layer, but is not limited thereto.

Another exemplary embodiment provides a method for producing a negative electrode for a secondary battery. According to an example, the production method may include: a) mixing silicon compound particles and a metal precursor; b) preliminarily heat treating a product from a), and c) heat treating a product from b), thereby preparing a negative electrode active material.

According to an exemplary embodiment, the production method may further include p1) mixing Si powder and $SiO_2$ powder and heat treating the mixture, thereby preparing the silicon compound particles. The process is mixing raw material powders and performing a heat treatment. The mixing of raw material powders may be mixing of Si powder and $SiO_2$ powder with a mixing ratio being appropriately adjusted so that Si and O mole ratios of silicon compound particles to be desired ($SiO_x$, $0<x\leq2$) may be formed. Subsequently, the mixed raw material powders may be placed in a furnace under an inert atmosphere, and heat treated at a temperature of lower than 900°C, preferably lower than 800°C, or 500 to 700°C, and more preferably 500 to 650°C for 1 to 12 hours or 1 to 8 hours under reduced pressure. Conventionally, a heat treatment at a high temperature of 900 to 1600°C was performed for producing silicon compound particles, but in the case of a $SiO_x$ material or a SiO material, c-Si seeds grow at a heat treatment temperature of 800°C or higher and crystallites definitely grow at about 900°C. Thus, in the present exemplary embodiment, formation of c-Si seeds and growth of c-Si are suppressed during production of silicon compound particles to produce an amorphous or microcrystalline silicon-based compound, and crystal particles may be controlled to be small while the crystallinity of Si is uniformly distributed. In a low temperature range where the growth of c-Si is suppressed, c-Si which maintains a seed form or is slightly more grown may be uniformly distributed. However, in a high temperature range, a disproportionation reaction is accelerated rather than further seed production, so that c-Si is controlled to be locally grown, and thus, growth of coarse and non-uniform sized c-Si may be confirmed.

Then, the produced silicon compound may be extracted, pulverized, and powdered to produce silicon compound particles.

In addition, according to an example, the silicon compound particles may be prepared by selectively further including p2) heat treating a product from the process of p1) in the presence of a hydrocarbon gas, with the process of p1).

A carbon layer may be further formed on the surface of the silicon compound particles produced above by the process of p2). According to an example, the carbon layer may be formed by introducing a hydrocarbon gas to a furnace and raising the temperature to a temperature lower than the heat treatment temperature in the production of the silicon compound. Specifically, the heat treatment may be performed at a temperature of lower than 800°C or a temperature of 500 to 700°C, more preferably a temperature of 500 to 650°C for 1 to 12 hours or 1 to 8 hours, under reduced pressure or inert atmosphere. Conventionally, the heat treatment was performed at a relatively higher temperature of 800 to 1200°C or 800 to 950°C for coating the surface of the silicon compound particles with a carbon material, but in this case, a disproportionation reaction of the silicon compound is accelerated due to the additional heat treatment to divide the region into Si and $SiO_x$ ($0<x<2$) or $SiO_2$ regions, and it is analyzed that in the silicon compound material, the growth of c-Si is promoted at a temperature of 800°C or higher and a size of the Si crystallites is increased. In the present exemplary embodiment, the size of Si crystallites is controlled to be immeasurably small, so that c-Si growth may be extremely suppressed. When the amorphous or microcrystalline silicon-based compound of the present exemplary embodiment is used, even in the case of performing the Li pretreatment under the same conditions, c-Si growth may be suppressed to a very high level, as compared with the silicon-based compound of a grown crystallite in the conventional art.

Therefore, in order to maintain the uniformity of crystallinity during carbon layer coating, wet coating using a polymer is performed or the temperature is controlled to be a temperature at or lower than the synthesis temperature of the silicon compound. For uniform coating at a low temperature, the selection of a carbon layer coating precursor or the pressure adjustment and kind selection of carrier gas should be careful during wet coating. When c-Si growth is efficiently suppressed in a carbon layer coating process for securing the electrical conductivity of the silicon compound, an amorphous or microcrystalline silicon compound may be synthesized, and this may be an important characteristic of a base material, which should be confirmed in the pretreatment of the negative electrode active material showing uniform crystallinity characteristics.

It is preferred to use a hydrocarbon gas having 3 or less carbon atoms as the hydrocarbon gas, since production costs are reduced and a good coating layer may be formed, but the present invention is not limited thereto.

Subsequently, a metal pretreatment process is performed.

The mixing process of a) is mixing silicon compound particles and a metal precursor, specifically mixing at 200 to 800 rpm, 250 to 600 rpm, or 300 to 500 rpm for 30 to 120 minutes. When a mixing speed is less than 200 rpm, uniform mixing is difficult even in the case of mixing for a long time, and it is not preferred in terms of process simplification. However, when a mixing speed is more than 800 rpm, a chemical reaction occurs by a kinetic energy to locally cause chemical deformation of the metal precursor, and make it difficult to control a uniform metal pretreatment reaction.

It is preferred to mix the silicon compound particles and the metal (M) precursor so that a M/Si mole ratio is more than 0.3 and 1.0 or less, more than 0.3 and 0.8 or less, preferably 0.4 to 1.0 or 0.4 to 0.8, and more preferably 0.5 to 1.0 or 0.5 to 0.8.

The silicon compound particles are as described above.

The metal precursor may be at least one Li precursor selected from $LiOH$, $Li$, $LiH$, $Li_2O$, and $Li_2CO_3$ or at least one Mg precursor selected from $Mg(OH)_2$, $Mg$, $MgH_2$, $MgO$, and $MgCOs$, and is not particularly limited as long as it is a compound which may be decomposed during a heat treatment.

The mixing process may be performed by a mixer and only a physical mixing treatment should be possible, but the mixing is not particularly limited to the structure and principle of a device. For example, a mixer in which a blade rotates in one direction, a one-way or two-way rotary ball mill, a mixer or milling machine in a form of allowing 2-axis or 3-axis movement, and the like may be used. Meanwhile, the mixing may need condition adjustment such as mixing in a drive room or a glove box form, in the case of a raw material which is concerned about deterioration possibility in the air or moisture.

The preliminary heat treatment process of b) may be preliminary heat treating a mixture of the silicon compound particles and the metal precursor which has been uniformly mixed as the product of the process of a) at a low temperature. The metal pretreatment process is a heat treatment at a high temperature, and the temperatures of the center and the surface parts in a furnace may be non-uniform due to the high activity of a Li source under rapid temperature change conditions, and thus, the production and growth of c-Si seeds inside are overloaded with a local area depending on the temperature gradient in the furnace, which may cause non-uniform crystallinity.

According to the present exemplary embodiment, an intermediate process of a preliminary heat treatment is performed before the heat treatment at a high temperature, thereby removing volatile side reaction materials which may react with the Li source in advance and alleviating a temperature gradient to derive a uniform reaction. In addition, some metal precursors which is in a reaction activated state during the preliminary heat treatment show a tendency to move to a part having a lower pretreatment metal concentration and react first. By using this, the preliminary heat treatment process may solve the problem in which the metal precursor is non-uniformly mixed before the subsequent heat treatment at a high temperature for the metal pretreatment to be present partly in excess around $SiO_x$ particles. Therefore, the agglomeration and growth of c-Si may be finely controlled in the subsequent heat treatment process of c) by the preliminary heat treatment process of b).

The preliminary heat treatment process of b) according to an example may be performed at 100°C or higher and lower than 500°C, 150°C or higher and lower than 500°C, 200 to 450°C, or 250 to 400°C for 30 to 120 minutes under an inert atmosphere. When the preliminary heat treatment temperature is 150°C or lower or the heat treatment time is 30 minutes or less, an effect to secure by the preliminary heat treatment may not be sufficient. However, when the preliminary heat treatment temperature is 500°C or higher, a reaction of a precursor metal and a silicon compound starts by the preliminary heat treatment, and it is difficult to control a reaction in the subsequent heat treatment process, for example, a prelithiation reaction.

The heat treatment process of c) may be a heat treatment at a high temperature of a mixture of the silicon compound particles and the metal precursor which has been preliminarily heat treated as the product of the process of b). According to the present exemplary embodiment, amorphous or microcrystalline silicon oxide particles may be produced by suppressing c-Si growth by the heat treatment process of c), and the characteristic distribution of uniform particles may be expected.

For example, the heat treatment process of c) may be performed at 500 to 800°C, 550 to 750°C, or 600 to 750°C for 1 to 12 hours. When the heat treatment temperature is lower than 500°C, agglomeration and growth occur locally in a less produced c-Si seeds, so that the c-Si size distribution may become non-uniform. However, when the heat treatment temperature is higher than 800°C, c-Si growth is promoted rather than c-Si seeds are further produced, and thus, the size of some c-Si is rapidly increased, so that the c-Si size distribution may become non-uniform.

Meanwhile, regarding the inert atmosphere, a known method in which the inside of a reaction unit is purged with inert gas to create the inert atmosphere may be applied, and the inert gas may be selected from Ne, Ar, Kr, $N_2$, and the like, preferably may be Ar or $N_2$, but is not limited thereto.

Subsequently, the heat treatment product may be recovered and pulverized to produce the negative electrode active material including the final negative electrode active material particles, but is not limited thereto. Any known pulverization method may be applied to the pulverization process, but is not limited thereto.

Another exemplary embodiment provides a secondary battery including the negative electrode. The negative electrode is as described above.

According to an example, the secondary battery may include the negative electrode; a positive electrode; a separator positioned between the negative electrode and the positive electrode; and an electrolyte solution.

The positive electrode may include a current collector, and a positive electrode active material layer formed by applying a positive electrode slurry including a positive electrode active material on the current collector.

The current collector may be the negative electrode current collector described above, or any known material in the art may be used, but the present invention is not limited thereto.

The positive electrode active material layer includes a positive electrode active material, and optionally, may further include a binder and a conductive material. The positive electrode active material may be any positive electrode active material known in the art, and for example, it is preferred to use a composite oxide of lithium with a metal selected from cobalt, manganese, nickel, and a combination thereof, but is not limited thereto.

The binder and the conductive material may be the negative electrode binder and the negative electrode conductive material described above, or any known material in the art may be used, but the present invention is not limited thereto.

The separator may be selected from glass fiber, polyester, polyethylene, polypropylene, polytetrafluoroethylene, or a combination thereof, and may be in a nonwoven or woven form. For example, in the lithium secondary battery, a polyolefin-based polymer separator such as polyethylene or polypropylene may be mainly used and a separator coated with a composition including a ceramic component or a polymer material may be used for securing thermal resistance or mechanical strength, and optionally, the separator may be used in a single layer or a multilayer structure, and any known separator in the art may be used, but is not limited thereto.

The electrolyte solution includes an organic solvent and a lithium salt.

The organic solvent serves as a medium in which ions involved in the electrochemical reaction of the battery may move, and for example, carbonate-based, ester-based, ether-based, ketone-based, alcohol-based, or aprotic solvents may be used, the organic solvent may be used alone or in combination of two or more, and a mixing ratio when used in combination of two or more may be appropriately adjusted depending on battery performance to be desired. Meanwhile, any known organic solvent in the art may be used, but is not limited thereto.

The lithium salt is dissolved in the organic solvent and acts as a source of the lithium ion in the battery to allow basic operation of the lithium secondary battery and is a material which promotes movement of lithium ions between a positive electrode and a negative electrode. An example of the lithium salt may include $LiPF_6$, $LiBF_4$, $LiSbF_6$, $LiAsF_6$, $LiN(SO_3C_2F_5)_2$, $LiN(CF_3SO_2)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (x and y are natural numbers), $LiCl$, $LiI$, $LiB(C_2O_4)_2$, or a combination thereof, but is not limited thereto.

A concentration of the lithium salt may be in a range of 0.1 M to 2.0 M. When the lithium salt concentration is within the range, the electrolyte solution has appropriate conductivity and viscosity, so that the electrolyte solution may exhibit excellent electrolyte solution performance and lithium ions may effectively move.

In addition, the electrolyte solution may further include pyridine, triethylphosphate, triethanolamine, cyclic ether, ethylene diamine, n-glyme, hexaphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxyethanol, aluminum trichloride, and the like, if necessary, for improving charge and discharge characteristics, flame retardant characteristics, and the like. In some cases, a halogen-containing solvent such as carbon tetrachloride and ethylene trifluoride may be further included for imparting non-flammability, and fluoro-ethylene carbonate (FEC), propene sulfone (PRS), fluoro-propylene carbonate (FPC), and the like may be further included for improving conservation properties at a high temperature.

The method for producing a secondary battery according to the present exemplary embodiment for achieving the above object may include laminating the negative electrode produced, the separator, and the positive electrode in this order to form an electrode assembly, placing the produced electrode assembly in a cylindrical battery case or an angled battery case, and then injecting an electrolyte solution thereinto to produce a battery. Otherwise, the battery may be produced by laminating the electrode assembly, immersing the assembly in the electrolyte solution, and placing the resultant product in a battery case and sealing the case.

As the battery case used in the present disclosure, those commonly used in the art may be adopted, there is no limitation in appearance depending on the battery use, and for example, a cylindrical shape, an angled shape, a pouch shape, a coin shape, or the like using a can may be used.

The lithium secondary battery according to the present disclosure may be used in a battery cell used as a power supply of a small device, and also may be preferably used as a unit battery in a medium or large battery module including a plurality of battery cells. A preferred example of the medium or large device may include an electric automobile, a hybrid electric automobile, a plug-in hybrid electric automobile, a system for power storage, and the like, but is not limited thereto.

Hereinafter, the preferred examples and comparative examples of the present exemplary embodiment will be described. However, the following examples are only a preferred example of the present exemplary embodiment, and the present exemplary embodiment is not limited thereto.

**Examples**

**(Examples 1 to 16, and Comparative Examples 1 to 7)**

1. (Production of silicon-based active material)

a) Silicon-based compound particles $SiO_x(0<x\leq2)$ and a raw material (LiH) including lithium which had been prepared in advance was added to a closed container, and was sufficiently mixed in a mixer. The silicon-based compound particles and LiH were added at a mole ratio Li/Si of 0.5 to 1.0, and a shaker allowing 2-axis movement was used as a mixer with a ball, and the mixing speed and the mixing time at this time are as shown in the following Table 1.

b) Subsequently, the mixed powder was filtered using a sieve of 25-250 um and then placed in an alumina crucible. The aluminum crucible was preliminary heat treated in a furnace under a nitrogen gas atmosphere. The preliminary heat treatment temperature and time are as shown in the following Table 1.

c) Subsequently, the temperature of the furnace was raised and a heat treatment was performed for 1 to 12 hours. The heat treatment temperature is as shown in the following Table 1. Thereafter, the heat treated powder was recovered and pulverized in a mortar to produce a silicon-based active material including a silicon oxide ($SiO_x$) and a lithium silicate (such as $Li_2Si_2O_5$ and $Li_2SiO_3$).

2. Production of negative electrode

23 wt% of the silicon-based active material of each of the examples and the comparative examples produced above, 71.5 wt% of artificial graphite, 0.5 wt% of a conductive material (CNT), 2 wt% of carboxymethyl cellulose, and 3 wt% of styrene butadiene rubber (SBR) were mixed in distilled water to produce a slurry, which was applied on a Cu foil and dried in vacuum at 80 to 160°C for 1 to 24 hours, thereby producing a negative electrode.

3. Production of half battery

The produced negative electrode and a lithium metal as a counter electrode were used, a PE separator was interposed between the negative electrode and the counter electrode, and an electrolyte was injected thereinto to assembly a coin cell (CR2016). The assembled coin cell was paused at room temperature for 3 to 24 hours to produce a half battery. At this time, the electrolyte solution was obtained by mixing 1.0 M $LiPF_6$ as a lithium salt with an organic solvent (EC:EMC= 3:7 vol%) and mixing 2 vol% of FEC 2 as an electrolyte additive.

[Table 1]

| | a) Mixing process | | b) Preliminary heat treatment process | | c) Heat treatment process |
|---|---|---|---|---|---|
| | Mixing speed [rpm] | Mixing time [min] | Heat treatment temperature [°C] | Heat treatment time [min] | Heat treatment temperature [°C] |
| Example 1 | 500 | 120 | 400 | 120 | 750 |
| Example 2 | 500 | 30 | 400 | 60 | 750 |
| Example 3 | 300 | 60 | 400 | 120 | 600 |
| Example 4 | 300 | 60 | 400 | 60 | 600 |
| Example 5 | 300 | 60 | 400 | 30 | 600 |
| Example 6 | 500 | 80 | 300 | 120 | 750 |
| Example 7 | 500 | 30 | 300 | 120 | 750 |
| Example 8 | 300 | 120 | 300 | 30 | 600 |
| Example 9 | 300 | 120 | 300 | 120 | 600 |
| Example 10 | 300 | 80 | 300 | 60 | 600 |
| Example 11 | 300 | 80 | 300 | 120 | 600 |
| Example 12 | 500 | 120 | 150 | 30 | 750 |

(continued)

| | a) Mixing process | | b) Preliminary heat treatment process | | c) Heat treatment process |
|---|---|---|---|---|---|
| | Mixing speed [rpm] | Mixing time [min] | Heat treatment temperature [°C] | Heat treatment time [min] | Heat treatment temperature [°C] |
| Example 13 | 500 | 60 | 150 | 60 | 750 |
| Example 14 | 300 | 30 | 150 | 30 | 750 |
| Example 15 | 300 | 30 | 150 | 60 | 750 |
| Example 16 | 300 | 120 | 150 | 120 | 600 |
| Comparative Example 1 | 500 | 60 | 400 | 30 | 900 |
| Comparative Example 2 | 900 | 60 | 400 | 30 | 900 |
| Comparative Example 3 | 100 | 120 | 150 | 30 | 600 |
| Comparative Example 4 | 100 | 120 | 400 | 120 | 600 |
| Comparative Example 5 | 900 | 60 | 400 | 120 | 750 |
| Comparative Example 6 | 500 | 120 | 500 | 30 | 750 |
| Comparative Example 7 | 900 | 120 | 500 | 120 | 900 |

**Evaluation Example**

(Evaluation method)

* Structural analysis of negative electrode active material particles by Raman spectrum analysis

Raman spectrum analysis was performed on the negative electrode produced above, and Invia confocal Raman microscope from Renishaw (UK) was used. Particle surface was measured 8 times at a laser wavelength of 532 nm, at a lens magnification of 50 times, in a range of 67-1800 cm$^{-1}$ in a static mode, and an average value was applied.

The Raman spectrum peak intensity ratio "Ia/Ib" was measured on the negative electrode produced for evaluating initial efficiency in "2. Production of negative electrode" above, and measured on a plurality of silicon-based active material particles in the negative electrode active material layer. Here, Ia is a peak intensity at $515 \pm 15$ cm$^{-1}$ in the Raman spectrum and Ib is a peak intensity at $470 \pm 30$ cm$^{-1}$ in the Raman spectrum.

In Table 2, "A", "B", and "C" were measured on each negative electrode produced above. "A" is an average value of Raman spectrum peak intensity ratios Ia/Ib for 50 silicon-based active material particles randomly selected in the negative electrode active material layer. "B" is an average value of values excluding top 10 values and bottom 10 values, for each Raman spectrum peak intensity ratio Ia/Ib value for the 50 silicon-based active material particles, and "C" is an average value of values excluding top 5 values and bottom 5 values, for each Raman spectrum peak intensity ratio Ia/Ib value for the 50 silicon-based active material particles.

* Evaluation of electrochemical properties (life characteristics)

In order to evaluate the electrochemical properties of a negative electrode, a half battery was produced, and life characteristics were measured. The produced half battery was charged with a constant current at a current of 0.1 C rate until a voltage reached 0.01V (vs. Li/Li$^+$), at room temperature (25°C), and then was charged with a constant voltage by cut-off at a current of 0.01 C rate while maintaining 0.01 V in a constant voltage mode. The battery was discharged at a constant current of 0.1 C rate until the voltage reached 1.5 V (vs. Li/Li$^+$). The charge and discharge were set as one cycle, and then in order to confirm the life characteristics, 50 cycles in which the applied current was changed to 0.5 C during charge and discharge were performed, with a pause of 10 minutes between the cycles. For confirming the life characteristics, a discharge capacity for 50 cycles to a discharge capacity for 2 cycles was set as a capacity retention rate (%) and life characteristics were measured, and the results are summarized in the following Table 2.

[Table 2]

| | Ia/Ib | | | Deviation | | Capacity retention rate [%, @50 cycle] |
|---|---|---|---|---|---|---|
| | A | C | B | A-C | A-B | |
| Example 1 | 4.58 | 4.38 | 4.40 | 0.20 | 0.18 | 73 |
| Example 2 | 3.09 | 2.85 | 2.86 | 0.24 | 0.23 | 71 |
| Example 3 | 1.24 | 0.96 | 0.62 | 0.28 | 0.62 | 83 |
| Example 4 | 1.00 | 0.68 | 0.61 | 0.32 | 0.39 | 86 |
| Example 5 | 0.94 | 0.54 | 0.44 | 0.40 | 0.50 | 94 |
| Example 6 | 2.42 | 2.22 | 2.18 | 0.20 | 0.24 | 80 |
| Example 7 | 2.14 | 2.06 | 2.05 | 0.08 | 0.09 | 82 |
| Example 8 | 0.78 | 0.66 | 0.61 | 0.12 | 0.17 | 91 |
| Example 9 | 0.61 | 0.51 | 0.49 | 0.10 | 0.12 | 92 |
| Example 10 | 0.59 | 0.48 | 0.43 | 0.11 | 0.16 | 95 |
| Example 11 | 0.41 | 0.38 | 0.38 | 0.03 | 0.03 | 97 |
| Example 12 | 2.90 | 2.78 | 2.79 | 0.12 | 0.11 | 74 |
| Example 13 | 2.5 | 2.47 | 2.47 | 0.03 | 0.03 | 90 |
| Example 14 | 1.80 | 1.15 | 0.99 | 0.65 | 0.81 | 77 |
| Example 15 | 1.41 | 1.05 | 0.87 | 0.36 | 0.54 | 90 |
| Example 16 | 1.30 | 0.83 | 0.58 | 0.48 | 0.73 | 90 |
| Comparative Example 1 | 8.99 | 7.55 | 7.01 | 1.44 | 1.98 | 48 |
| Comparative Example 2 | 9.12 | 8.61 | 6.40 | 0.51 | 2.72 | 47 |
| Comparative Example 3 | 7.18 | 6.44 | 6.05 | 0.74 | 1.13 | 53 |
| Comparative Example 4 | 7.64 | 7.12 | 5.49 | 0.52 | 2.15 | 57 |
| Comparative Example 5 | 7.89 | 6.52 | 5.70 | 1.37 | 2.19 | 58 |
| Comparative Example 6 | 8.78 | 7.33 | 5.22 | 1.45 | 3.56 | 45 |
| Comparative Example 7 | 13.02 | 9.48 | 8.26 | 3.54 | 4.76 | 36 |

It was confirmed from Tables 1 and 2 that the example of the present exemplary embodiments had excellent life characteristics as compared with the comparative examples.

Referring to Comparative Examples 1 and 2, when the heat treatment was performed at a high temperature of 900°C or higher, a crystal size was increased and excessive growth occurred rather than c-Si seeds were further produced, and thus, a uniform prelithiation reaction did not occur.

It was found from Comparative Examples 3 and 4 that when a mixing speed was excessively low and substantially sufficient mixing was not performed, uniform mixing was difficult even in the case of mixing for a long time, and then even when a pretreatment (preliminary heat treatment) was performed, a non-uniform mixture was produced. However, in Comparative Examples 5 and 7, since a mixing speed (900 rpm) was relatively high, a chemical reaction by a kinetic energy occurred, so that a uniform prelithiation reaction control was difficult.

Referring to Comparative Examples 6 and 7, it was found that when a pretreatment (preliminary heat treatment) temperature was excessive at 500°C or higher, a reaction of Li and SiO$_x$ started already in the preliminary heat treatment, so that it was difficult to control a prelithiation reaction, and as the preliminary heat treatment time increased (120 minutes or more), a uniform reaction was difficult.

In summary, it is preferred that the heat treatment temperature is 800°C or lower for improving the uniformity of a phase. In addition, the crystallinity of the silicon-based active material was increased under harsh conditions (increased mixing speed, increased mixing time, increased pretreatment temperature, increased pretreatment time, and increased heat treatment temperature), so that initial efficiency may be somewhat improved, but the uniform size distribution of the crystalline silicon-based active material particles was not secured, resulting in rapid life deterioration.

According to the present disclosure, production conditions during production of a silicon-based negative electrode active material are controlled to specific conditions, and a preliminary heat treatment process is performed before a metal pretreatment process at a high temperature, thereby securing a uniform size distribution of crystalline Si(c-Si).

According to the present disclosure, a Raman spectrum peak intensity ratio for 50 silicon-based active material particles randomly selected in a negative electrode active material layer is controlled to specific conditions, thereby securing uniform crystallinity and size distribution of silicon-based active material particles in the negative electrode active material layer.

Although the examples of the exemplary embodiments have been described above, the present exemplary embodiment is not limiting. The invention is defined by the appended claims.

**Claims**

1. A negative electrode for a secondary battery comprising:

   a current collector; and a negative electrode active material layer including a plurality of silicon-based active material particles, which is positioned on the current collector,
   wherein the following Relation 1 is satisfied:

   $$[\text{Relation 1}] \quad 0.01 \leq A{-}B \leq 0.81$$

   wherein A is an average value of Raman spectrum peak intensity ratios Ia/Ib for 50 silicon-based active material particles randomly selected in the negative electrode active material layer, B is an average value of values excluding top 10 values and bottom 10 values, for each Raman spectrum peak intensity ratio Ia/Ib value for the 50 silicon-based active material particles, Ia is a peak intensity at $515\pm15$ cm$^{-1}$, and Ib is a peak intensity at $470\pm30$ cm$^{-1}$.

2. The negative electrode for a secondary battery of claim 1, wherein the silicon-based active material is at least one selected from the group consisting of silicon, a silicon oxide (SiO$_x$, 0<x≤2), a silicon alloy, and a silicon/carbon composite.

3. The negative electrode for a secondary battery of claim 1 or 2, wherein the silicon-based active material includes a silicon oxide pretreated with a metal.

4. The negative electrode for a secondary battery of claim 3, wherein the silicon oxide pretreated with a metal includes a silicon oxide (SiO$_x$, 0<x≤2); and a metal silicate positioned on at least a part of the silicon oxide (M$_a$Si$_b$O$_c$, M is Li or Mg, 1≤a≤6, 1≤b<3, and 0<c≤7).

5. The negative electrode for a secondary battery of claim 3, wherein the silicon oxide pretreated with a metal includes 40 to 95 wt% of a metal silicate with respect to a total weight.

6. The negative electrode for a secondary battery of any one of claims 1 to 5, wherein the following Relation 2 is further satisfied:

   $$[\text{Relation 2}] \quad 0.01 \leq A{-}C \leq 0.65$$

   wherein A is an average value of Raman spectrum peak intensity ratios Ia/Ib for 50 silicon-based active material particles randomly selected in the negative electrode active material layer, C is an average value of values excluding top 5 values and bottom 5 values, for each Raman spectrum peak intensity ratio Ia/Ib value for the 50 silicon-based active material particles, Ia is a peak intensity at $515\pm15$ cm$^{-1}$, and Ib is a peak intensity at $470\pm30$ cm$^{-1}$.

7. The negative electrode for a secondary battery of claim 6, wherein at least one selected from the following Relation 3a, Relation 3b, and Relation 3c is satisfied:

$$[\text{Relation 3a}] \quad 0.3 \leq A \leq 8.50$$

$$[\text{Relation 3b}] \quad 0.3 \leq B \leq 7.71$$

$$[\text{Relation 3c}] \quad 0.3 \leq C \leq 7.91$$

wherein A is an average value of Raman spectrum peak intensity ratios Ia/Ib for 50 silicon-based active material particles randomly selected in the negative electrode active material layer, B is an average value of values excluding top 10 values and bottom 10 values, for each Raman spectrum peak intensity ratio Ia/Ib value for the 50 silicon-based active material particles, C is an average value of values excluding top 5 values and bottom 5 values, for each Raman spectrum peak intensity ratio Ia/Ib value for the 50 silicon-based active material particles.

8. The negative electrode for a secondary battery of any one of claims 1 to 7, wherein the negative electrode active material layer includes 10 wt% or more of the silicon-based active material particles with respect to a total weight of the negative electrode active material.

9. A method for producing a negative electrode for a secondary battery according to any of claims 1 to 8, the method comprising:

   a) mixing silicon compound particles and a metal precursor at 200 to 800 rpm;
   b) preliminarily heat treating a product from a) at 100°C or higher and lower than 500°C; and
   c) heat treating a product from b) at 500 to 800°C, thereby preparing a negative electrode active material.

10. The method for producing a negative electrode for a secondary battery of claim 9, further comprising:
    before a), p1) mixing Si powder and $SiO_2$ powder and heat treating the mixture at lower than 900°C, thereby preparing the silicon compound particles.

11. The method for producing a negative electrode for a secondary battery of claim 9, further comprising:

    before a), p1) mixing Si powder and $SiO_2$ powder and heat treating the mixture at lower than 900°C; and
    p2) heat treating a product from p1) at lower than 800°C in the presence of a hydrocarbon gas, thereby preparing the silicon compound particles.

12. A secondary battery comprising the negative electrode of any one of claims 1 to 8.


**Patentansprüche**

1. Negative Elektrode für eine Sekundärbatterie, umfassend:

   einen Stromabnehmer; und eine auf dem Stromabnehmer positionierte Aktivmaterialschicht der negativen Elektrode, die eine Vielzahl von Aktivmaterialpartikeln auf Siliziumbasis enthält,
   wobei die folgende Beziehung 1 erfüllt ist:

$$[\text{Beziehung 1}] \quad 0{,}01 \leq A\text{-}B \leq 0{,}81$$

wobei A ein Mittelwert der Raman-Spektrum-Peak-Intensitätsverhältnisse Ia/Ib für 50 in der Aktivmaterialschicht der negativen Elektrode zufällig ausgewählte Aktivmaterialpartikel auf Siliziumbasis ist, B ein Mittelwert von Werten mit Ausnahme von oberen 10-Werten und unteren 10-Werten für jeden Raman-Spektrum-Peak-Intensitätsverhältnis Ia/Ib-Wert für die 50 Aktivmaterialpartikel auf Siliziumbasis ist, Ia eine Peak-Intensität bei 515 $\pm$ 15 cm$^{-1}$ ist und Ib eine Peak-Intensität bei 470 $\pm$ 30 cm$^{-1}$ ist.

2. Negative Elektrode für eine Sekundärbatterie gemäß Anspruch 1, wobei das Aktivmaterial auf Siliziumbasis mindestens eines ist, das aus der Gruppe ausgewählt ist, die aus Silizium, einem Siliziumoxid ($SiO_x$, $0 < x \leq 2$), einer Siliziumlegierung und einem Silizium/Kohlenstoff-Verbundstoff besteht.

3. Negative Elektrode für eine Sekundärbatterie gemäß Anspruch 1 oder 2, wobei das Aktivmaterial auf Siliziumbasis ein mit einem Metall vorbehandeltes Siliziumoxid enthält.

4. Negative Elektrode für eine Sekundärbatterie gemäß Anspruch 3, wobei das mit einem Metall vorbehandelte Siliziumoxid ein Siliziumoxid ($SiO_x$, $0 < x \leq 2$); und ein auf mindestens einem Teil des Siliziumoxids positioniertes Metallsilikat ($M_aSiOC$, M ist Li oder Mg, $1 \leq a \leq 6$, $1 \leq b < 3$ und $0 < c \leq 7$) enthält.

5. Negative Elektrode für eine Sekundärbatterie gemäß Anspruch 3, wobei das mit einem Metall vorbehandelte Siliziumoxid 40 bis 95 Gew.-% eines Metallsilikats in Bezug auf ein Gesamtgewicht enthält.

6. Negative Elektrode für eine Sekundärbatterie gemäß einem der Ansprüche 1 bis 5, wobei die folgende Beziehung 2 ferner erfüllt ist:

$$[Beziehung\ 2]\ 0{,}01 \leq A\text{-}C \leq 0{,}65$$

wobei A ein Mittelwert der Raman-Spektrum-Peak-Intensitätsverhältnisse Ia/Ib für 50 in der Aktivmaterialschicht der negativen Elektrode zufällig ausgewählte Aktivmaterialpartikel auf Siliziumbasis ist, C ein Mittelwert von Werten mit Ausnahme von oberen 5-Werten und unteren 5-Werten für jeden Raman-Spektrum-Peak-Intensitätsverhältnis Ia/Ib-Wert für die 50 Aktivmaterialpartikel auf Siliziumbasis ist, Ia eine Peak-Intensität bei $515 \pm 15$ cm$^{-1}$ ist und Ib eine Peak-Intensität bei $470 \pm 30$ cm$^{-1}$ ist.

7. Negative Elektrode für eine Sekundärbatterie gemäß Anspruch 6, wobei mindestens eine, ausgewählt aus der folgenden Beziehung 3a, Beziehung 3b und Beziehung 3c, erfüllt ist:

$$[Beziehung\ 3a]\ 0{,}3 \leq A \leq 8{,}50$$

$$[Beziehung\ 3b]\ 0{,}3 \leq B \leq 7{,}71$$

$$[Beziehung\ 3c]\ 0{,}3 \leq C \leq 7{,}91$$

wobei A ein Mittelwert der Raman-Spektrum-Peak-Intensitätsverhältnisse Ia/Ib für 50 in der Aktivmaterialschicht der negativen Elektrode zufällig ausgewählte Aktivmaterialpartikel auf Siliziumbasis ist, B ein Mittelwert von Werten mit Ausnahme von oberen 10-Werten und unteren 10-Werten für jeden Raman-Spektrum-Peak-Intensitätsverhältnis Ia/Ib-Wert für die 50 Aktivmaterialpartikel auf Siliziumbasis ist, C ein Mittelwert von Werten mit Ausnahme von oberen 5-Werten und unteren 5-Werten für jeden Raman-Spektrum-Peak-Intensitätsverhältnis Ia/Ib-Wert für die 50 Aktivmaterialpartikel auf Siliziumbasis ist.

8. Negative Elektrode für eine Sekundärbatterie gemäß einem der Ansprüche 1 bis 7, wobei die Aktivmaterialschicht der negativen Elektrode 10 Gew.-% oder mehr der Aktivmaterialpartikel auf Siliziumbasis in Bezug auf ein Gesamtgewicht des Aktivmaterials der negativen Elektrode enthält.

9. Verfahren zur Herstellung einer negativen Elektrode für eine Sekundärbatterie gemäß einem der Ansprüche 1 bis 8, wobei das Verfahren umfasst:

   a) Mischen von Siliziumverbindungspartikeln und einem Metallpräkursor bei 200 bis 800 U/min;
   b) vorläufiges Wärmebehandeln eines Produkts aus a) bei 100°C oder höher und niedriger als 500°C; und
   c) Wärmebehandeln eines Produkts aus b) bei 500 bis 800°C, wodurch ein Aktivmaterial der negativen Elektrode hergestellt wird.

10. Verfahren zur Herstellung einer negativen Elektrode für eine Sekundärbatterie gemäß Anspruch 9, ferner umfassend:

vor a), p1) Mischen von Si-Pulver und SiO$_2$ -Pulver und Wärmebehandeln der Mischung bei weniger als 900°C, wodurch die Siliziumverbindungspartikel hergestellt werden.

**11.** Verfahren zur Herstellung einer negativen Elektrode für eine Sekundärbatterie gemäß Anspruch 9, ferner umfassend:

vor a), p1) Mischen von Si-Pulver und SiO$_2$ -Pulver und Wärmebehandeln der Mischung bei weniger als 900°C; und

p2) Wärmebehandeln eines Produkts aus p1) bei weniger als 800°C in Gegenwart eines Kohlenwasserstoffgases, wodurch die Siliziumverbindungspartikel hergestellt werden.

**12.** Sekundärbatterie, die negative Elektrode gemäß einem der Ansprüche 1 bis 8 umfasst.

**Revendications**

**1.** Une électrode négative pour une batterie secondaire comprenant :

un collecteur de courant ; et une couche de matériau actif d'électrode négative incluant une pluralité de particules de matériau actif à base de silicium, qui est positionnée sur le collecteur de courant, dans laquelle la Relation 1 suivante est satisfaite :

$$[\text{Relation 1}] \quad 0,01 \leq A-B \leq 0,81$$

dans laquelle A est une valeur moyenne de rapports d'intensité de pic de spectre Raman Ia/Ib pour 50 particules de matériau actif à base de silicium sélectionnées de manière aléatoire dans la couche de matériau actif d'électrode négative, B est une valeur moyenne de valeurs excluant des valeurs 10 supérieures et des valeurs 10 inférieures, pour chaque valeur de rapport d'intensité de pic de spectre Raman Ia/Ib pour les 50 particules de matériau actif à base de silicium, Ia est une intensité de pic à 515 $\pm$ 15 cm$^{-1}$ , et Ib est une intensité de pic à 470 $\pm$ 30 cm$^{-1}$ .

**2.** L'électrode négative pour une batterie secondaire selon la revendication 1, dans laquelle le matériau actif à base de silicium est au moins l'un sélectionné dans le groupe constitué de silicium, d'un oxyde de silicium (SiO$_x$, 0 < x $\leq$ 2), d'un alliage de silicium, et d'un composite de silicium/carbone.

**3.** L'électrode négative pour une batterie secondaire selon la revendication 1 ou 2, dans laquelle le matériau actif à base de silicium inclut un oxyde de silicium prétraité avec un métal.

**4.** L'électrode négative pour une batterie secondaire selon la revendication 3, dans laquelle l'oxyde de silicium prétraité avec un métal inclut un oxyde de silicium (SiO$_x$, 0 < x $\leq$ 2) ; et un silicate métallique positionné sur au moins une partie de l'oxyde de silicium. (M$_a$Si$_b$O$_c$, M est Li ou Mg, 1$\leq$a$\leq$6, 1$\leq$b<3, et 0<c$\leq$7).

**5.** L'électrode négative pour une batterie secondaire selon la revendication 3, dans laquelle l'oxyde de silicium prétraité avec un métal inclut 40 à 95 % en poids d'un silicate métallique par rapport à un poids total.

**6.** L'électrode négative pour une batterie secondaire selon l'une quelconque des revendications 1 à 5, dans laquelle la Relation 2 suivante est en outre satisfaite :

$$[\text{Relation 2}] \quad 0,01 \leq A-C \leq 0,65$$

dans laquelle A est une valeur moyenne de rapports d'intensité de pic de spectre Raman Ia/Ib pour 50 particules de matériau actif à base de silicium sélectionnées de manière aléatoire dans la couche de matériau actif d'électrode négative, C est une valeur moyenne de valeurs excluant des valeurs 5 supérieures et des valeurs 5 inférieures, pour chaque valeur de rapport d'intensité de pic de spectre Raman Ia/Ib pour les 50 particules de matériau actif à base de silicium, Ia est une intensité de pic à 515 $\pm$ 15 cm$^{-1}$ , et Ib est une intensité de pic à 470 $\pm$ 30 cm$^{-1}$ .

**7.** L'électrode négative pour une batterie secondaire selon la revendication 6, dans laquelle au moins l'une sélectionnée parmi la Relation 3a, la Relation 3b, et la Relation 3c suivantes est satisfaite :

$$[\text{Relation 3a}] \quad 0,3 \leq A \leq 8,50$$

$$[\text{Relation 3b}] \quad 0,3 \leq B \leq 7,71$$

$$[\text{Relation 3c}] \quad 0,3 \leq C \leq 7,91$$

dans laquelle A est une valeur moyenne de rapports d'intensité de pic de spectre Raman Ia/Ib pour 50 particules de matériau actif à base de silicium sélectionnées de manière aléatoire dans la couche de matériau actif d'électrode négative, B est une valeur moyenne de valeurs excluant des valeurs 10 supérieures et des valeurs 10 inférieures, pour chaque valeur de rapport d'intensité de pic de spectre Raman Ia/Ib pour les 50 particules de matériau actif à base de silicium, C est une valeur moyenne de valeurs excluant des valeurs 5 supérieures et des valeurs 5 inférieures, pour chaque valeur de rapport d'intensité de pic de spectre Raman Ia/Ib pour les 50 particules de matériau actif à base de silicium.

8. L'électrode négative pour une batterie secondaire selon l'une quelconque des revendications 1 à 7, dans laquelle la couche de matériau actif d'électrode négative inclut 10 % en poids ou plus des particules de matériau actif à base de silicium par rapport à un poids total du matériau actif d'électrode négative.

9. Un procédé pour produire une électrode négative pour une batterie secondaire selon l'une quelconque des revendications 1 à 8, le procédé comprenant :

   a) mélanger des particules de composé de silicium et un précurseur de métal à 200 à 800 tr/min ;
   b) traiter thermiquement au préalable un produit de a) à 100 °C ou plus et moins de 500 °C ; et
   c) traiter thermiquement un produit de b) à 500 à 800 °C, préparant ainsi un matériau actif d'électrode négative.

10. Le procédé pour produire une électrode négative pour une batterie secondaire selon la revendication 9, comprenant en outre :
   avant a), p1) mélanger de la poudre de Si et de la poudre de $SiO_2$ et traiter thermiquement le mélange à moins de 900 °C, préparant ainsi les particules de composé de silicium.

11. Le procédé pour produire une électrode négative pour une batterie secondaire selon la revendication 9, comprenant en outre :

   avant a), p1) mélanger de la poudre de Si et de la poudre de $SiO_2$ et traiter thermiquement le mélange à moins de 900 °C ; et
   p2) traiter thermiquement un produit de p1) à moins de 800 °C en présence d'un gaz hydrocarboné, préparant ainsi les particules de composé de silicium.

12. Une batterie secondaire comprenant l'électrode négative selon l'une quelconque des revendications 1 à 8.

**EP 4 210 126 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220002041

- US 2021363020 A1